# EUROPÄISCHE PATENTSCHRIFT

(11) **EP 2 530 418 B1**
(45) Veröffentlichungstag und Bekanntmachung des Hinweises auf die Patenterteilung: **01.04.2015**
(21) Anmeldenummer: 12401063.8
(22) Anmeldetag: 17.04.2012
(51) Int. Cl.: F28D 20/00

(54) **Wärmespeicher**
Heat accumulator
Accumulateur thermique

(30) Priorität: 30.05.2011 DE 102011050731
(43) Veröffentlichungstag der Anmeldung: 05.12.2012
(73) Patentinhaber: KERMI GmbH, 94447 Plattling (DE)
(72) Erfinder: Fonfara, Harald, 94551 Lalling (DE); Seil, Brigitte, 94167 Tettenweis (DE)
(74) Vertreter: Mischung, Ralf

(56) Entgegenhaltungen:
- EP-A2- 0 924 471
- DE-A1-102008 059 544
- DE-A1-102009 024 304
- DE-U1-202009 003 113
- NL-C2- 1 018 449

## Beschreibung

Die vorliegende Erfindung betrifft einen Wärmespeicher zur temperaturgeschichteten Aufnahme eines Wärmeträgers nach dem Oberbegriff des Anspruchs 1.

Derartige Wärmespeicher sind aus dem Stand der Technik bekannt und dienen dazu, Wasser mit möglichst hoher Temperatur speichern zu können. Dabei wird die Anordnung des Wassers in unterschiedlichen Temperaturschichten übereinander angestrebt, wobei diese Schichten bei der Beladung des Behälters möglichst nicht vermischt werden sollen. Bekannt ist dabei insbesondere, ein durch Sonnenenergie gewonnenes Wärmeangebot dem Wärmespeicher zuzuführen, und zwar jeweils auf dem Höhenniveau, auf dem sich innerhalb des Wärmespeichers die Wasserschicht mit der entsprechenden Temperatur befindet.

Das unterschiedliche Wärmeangebot der Solarenergie führt zu schwankenden Temperaturen des Mediums, welches von der Solaranlage bereitgestellt wird (Solarmedium). Entsprechend muss der durch das Solarmedium unterschiedlich hoch erwärmte Wärmeträger auf unterschiedlichen Höhenniveaus des Wärmespeichers ("Behälters") eingespeist werden, um eine vertikale Durchmischung der einzelnen Temperaturschichten im Wärmespeicher möglichst zu vermeiden. Dazu sieht der Stand der Technik Steigleitungen vor, die über mehrere Öffnungen mit dem Wärmespeicher verbunden sind. Der vom Solarmedium erwärmte Wärmeträger steigt dabei innerhalb der Steigleitung aufgrund von Dichteunterschieden auf das seiner Temperatur zugehörige Niveau an, um von dort im Wesentlichen horizontal in den angrenzenden Behälter überzutreten.

Insbesondere aus der EP 0 924 471 A2 ist eine solche Anlage bekannt. Ein dem eigentlichen Wärmespeicherbehälter benachbarter Wärmetauscher überträgt dabei die Solarenergie auf den im Behälter zu speichernden ersten Wärmeträger. Das Solarmedium (zweiter Wärmeträger) durchströmt dabei eine wendelförmige Rohrleitung. Die Rohrleitung ist in einem Mantelgefäß angeordnet, welches den ersten Wärmeträger führt, und welches oberhalb der wendelförmigen Rohrleitung in eine Steigleitung übergeht. Das Mantelgefäß und die Steigleitung sind über vier Verbindungsabschnitte auf unterschiedlichen Höhenniveaus mit dem angrenzenden Behälter verbunden. Der im Mantelgefäß aufgewärmte erste Wärmeträger strömt in Abhängigkeit seiner Temperatur auf dem zugehörigen Höhenniveau aus dem Mantelgefäß oder der Steigleitung durch das dem Niveau am ehesten entsprechende Verbindungsstück in den Wärmespeicherbehälter.

Diese Lösung hat jedoch den Nachteil, dass ein "Vorschichten" des Solarfluids nicht möglich ist. Eher gering erwärmtes Solarmedium führt gar zu Abkühlungen des ersten Wärmeträgers im Bereich des oberen Endes der wendelförmigen Rohrleitung. Zur Vermeidung von unerwünschter Zuströmung aus dem Speicherbehälter bei Beladungen mit mittleren Temperaturen sind zumindest im mittleren Bereich auch schräg angeordnete Anschlüsse erforderlich, welche den Aufbau erschweren und verteuern.

Aufgabe der Erfindung war es daher, einen Wärmespeicher zur Überwindung der vorgenannten Nachteile anzubieten.

Die Aufgabe wird gelöst durch einen Wärmespeicher nach Anspruch 1. Weitere vorteilhafte Ausführungsformen ergeben sich aus den Unteransprüchen.

Die Erfindung geht von der Erkenntnis aus, dass eine dem Wärmespeicher vorgeschaltete Wärmetauschereinheit wenigstens zwei getrennte Tauschersegmente umfasst, wobei jedes Tauschersegment einen eigenen Ladekreis mit dem Wärmespeicherbehälter bildet. Auf diese Weise ist es möglich, den zweiten, von der Solaranlage bereitgestellten Wärmeträger in der Wärmetauschereinheit temperaturabhängig zu schichten, also bereits außerhalb des eigentlichen Speicherbehälters eine Art Vorschichtung vorzunehmen. Die einzelnen Tauschersegmente übertragen die Wärme dann in Abhängigkeit dieser Schichten auf den in jedem Tauschersegment separat zirkulierenden ersten Wärmeträger. Im Gegensatz zum Stand der Technik besteht also keine über die gesamte Höhe des Speicherbehälters ausgebildete Steigleitung, welche den ersten Wärmeträger mit allen auftretenden unterschiedlichen Temperaturniveaus führt. Statt dessen sind innerhalb der Wärmetauschereinheit zwei oder auch mehr Tauschersegmente vorgesehen, welche den ersten Wärmeträger nur im Bereich desjenigen Temperaturintervalls erwärmen, welches durch die Höhenanordnung des jeweiligen Tauschersegments innerhalb der Wärmetauschereinheit und damit innerhalb des geschichteten zweiten Wärmeträgers bestimmt wird.

Vertikale Strömungsbewegungen des ersten Wärmeträgers innerhalb der Wärmetauschereinheit sind damit zwangsläufig limitiert auf maximal die vertikale Höhe des betreffenden Tauschersegments. Die vom zweiten Wärmeträger (Solarmedium) bereitgestellte Energie kann bereits in der Wärmetauschereinheit vorgeschichtet und über separate Tauschersegmente dem Wärmespeicherbehälter zugeführt werden.

Entsprechend sieht eine Ausführungsform der Erfindung vor, dass die Wärmetauschereinheit einen Tauscherbehälter umfasst, innerhalb dessen alle Tauschersegmente angeordnet sind. Dem Tauscherbehälter wird dabei der zweite Wärmeträger zugeführt, welcher von einer separaten Einheit (insbesondere einer Solaranlage) erwärmt wird. Zweckmäßigerweise ist der Tauscherbehälter so dimensioniert, dass sich der zweite Wärmeträger in seinem Inneren "aufschichten", also in übereinander liegenden Schichten unterschiedlicher Temperaturniveaus anordnen lässt. Die Zu- und Abfuhr des zweiten Wärmeträgers wird dabei zweckmäßigerweise so gestaltet, dass die einzelnen Schichten in vertikaler Richtung möglichst wenig Verwirbelung erfahren.

Die einzelnen Tauschersegmente sind innerhalb des Tauscherbehälters angeordnet und jeweils über eigene, vorzugsweise horizontale, Verbindungsleitungen durch die Wand des äußeren Tauscherbehälters hindurch mit dem angrenzend angeordneten Behälter des Wärmespeichers verbunden.

Die einzelnen Tauschersegmente der Erfindung sind in vertikaler Richtung vollständig übereinander angeordnet, so dass jede Tauschereinheit eine nur ihr zugeordnete Gruppe von Temperaturschichten des zweiten Wärmeträgers durchragt. Alternativ oder ergänzend ist es jedoch auch möglich, die einzelnen Tauschersegmente in vertikaler Richtung einander überlappend anzuordnen, so dass beispielsweise ein Tauschersegment mit seinem untersten Abschnitt und ein vertikal benachbartes weiteres Tauschersegment mit seinem obersten Abschnitt innerhalb der gleichen Temperaturschicht des zweiten Wärmeträgers zu liegen kommt. Die vertikale Höhe der einzelnen Tauschersegmente und deren vertikale Nähe zueinander bestimmt dabei ebenso wie ihre Anzahl die Möglichkeiten, die geschichteten Temperaturniveaus des zweiten Wärmeträgers mit möglichst geringen Temperaturabweichungen in die entsprechend im Wärmespeicher ausgebildeten Temperaturschichten zu übertragen.

Zur Ausbildung des jeweils eigenen Ladekreises und zum Austausch des ersten Wärmeträgers ist jedes Tauschsegment über Verbindungsleitungen mit dem Behälter verbunden, um jeweils einen getrennten Ladekreis pro Tauschersegment auszubilden. Der Umlauf des ersten Wärmeträgers, vorzugsweise Wasser, erfolgt vorzugsweise nicht mit Hilfsenergie, sondern nach dem Thermosiphonprinzip, also aufgrund von Dichteunterschieden. Entsprechend sind die Verbindungsleitungen von jedem Tauscherelement zum Behälter des Wärmespeichers bzw. von dort zurück vorzugsweise horizontal ausgebildet, um ein einfaches Überströmen des Wärmeträgers in den Behälter zu ermöglichen.

Abhängig von den jeweiligen Leitungsquerschnitten kann es dabei erforderlich werden, entgegengesetzt gerichtete Strömungen innerhalb einer Leitung zu vermeiden, bei der beispielsweise ein kühlerer Anteil in der unteren Leitungsquerschnittshälfte zu einem Tauschersegment strömt, während in der oberen Leitungsquerschnittshälfte derselben Leitung ein wärmerer Anteil zum Behälter strömt. Aus diesem Grund sieht eine vorteilhafte Ausführungsform der Erfindung vor, dass in wenigstens einer der die Tauschersegmente mit dem Behälter verbindende Leitungen eine Zirkulationssperre angeordnet ist, um den vorgenannten Effekt zu vermeiden. In Frage kommt hierfür beispielsweise die Verwendung zweier Plättchen die in den Leitungsquerschnitt eingesetzt werden und diesen jeweils so asymmetrisch teilweise verengen, dass die Strömung im Bereich des ersten Plättchens auf den höher gelegenen oberen Querschnittsabschnitt der Leitung begrenzt wird, während das zweite Plättchen die Strömung auf die untere Querschnittshälfte begrenzt. Dadurch sind zwei entgegengesetzt zueinander gerichtete Strömungen innerhalb der Leitung, zumal nach dem Thermosiphonprinzip, recht gut ausgeschlossen.

Eine alternative Ausführungsform sieht die Verwendung eines helixförmigen Bauelementes als Zirkulationssperre vor. Dieses reduziert den freien Leitungsquerschnitt nur gering, erstreckt sich jedoch über eine oder mehrere Steigungen entlang der Leitung, wodurch der Leitungsinhalt entlang der Zirkulationssperre einem wendelförmigen Pfad folgen muss, der zwingend vom unteren Leitungsquerschnitt in den oberen Leitungsquerschnitt führt und so eine Gegenströmung verhindert. Die helixförmige Zirkulationssperre zeichnet sich durch den Vorteil aus, dass sie einstückig ausgebildet sein kann und sich ohne besonderen Montageaufwand manuell in den betreffenden Leitungsabschnitt einschieben lässt. Je nach Gestalt und Fertigungstoleranz kann sich eine spezielle Befestigung der Zirkulationssperre innerhalb des Leitungsabschnitts erübrigen, etwa bei einer Kunstoffhelix mit leichtem Übermaß gegenüber dem Innendurchmesser der Leitung.

Obwohl die einzelnen Tauschersegmente der Wärmetauschereinheit baugleich ausgeführt sein können besteht erfindungsgemäß auch die Möglichkeit, je nach bevorzugtem Anwendungsfall unterschiedlich große Tauschersegmente zu verwenden. So ist es möglich, bei beispielsweise insgesamt zwei Tauschersegmenten den oberen größer zu wählen als den unteren, wenn der geplante Nutzungsschwerpunkt bei der Trinkwassererwärmung liegt. Soll die Solarenergie dagegen hauptsächlich zur Heizungsunterstützung genutzt werden, könnte der Einbau auch umgekehrt erfolgen mit dem größeren Tauscherelement unterhalb des kleineren.

Erfindungsgemäß verwendbare Tauscherelemente sind beispielsweise vertikale Rohrbündel, welche an ihren Enden jeweils in einem gemeinsamen Sammelbereich münden, um von dort mit dem Behälter des Wärmespeichers verbunden zu werden. Andere Arten von Wärmetauschern sind ebenso denkbar, wobei sie zweckmäßigerweise auf der Primärseite (die Seite des zweiten Wärmeträgers, vorzugsweise Solarmedium) die Ausbildung von Temperaturschichten ermöglichen sollten, aber nicht müssen. Selbstverständlich können auch unterschiedliche Typen von Tauscherelementen bzw. Wärmetauschern innerhalb einer Wärmetauschereinheit angeordnet werden, die beispielsweise hinsichtlich ihrer wärmeübertragenden Fläche stark differieren, um so eine bessere Anpassung an die Nutzererfordernisse vornehmen zu können, wie sie beispielsweise bei sehr großen Solar-Kollektorfeldern oder bei sogenannten LowFlow-Systemen vorliegen.

Um den erfindungsgemäßen Wärmespeicher für unterschiedliche Anwendungsfälle zu nutzen sieht dieser vorzugsweise für jeden Nutzungsfall geeignete Anschlussstutzen vor, die im Falle der Nichtnutzung mit Blindflanschen abgedeckt werden können. So ist auch eine spätere Umrüstung bei geänderten Nutzungsabsichten ohne weiteres möglich, indem die Wärmetauschereinheit über andere bzw. auf anderen Höhenniveaus befindliche Stutzen bzw. Verbindungsleitungen mit dem Behälter verbunden wird. Auch ist es denkbar, die Wärmetauschereinheit zu demontieren und horizontal kopfüber wieder an den Behälter anzuschließen, sollte die vorgenannte Nutzung für überwiegende Trinkwassererwärmung auf eine solche zur bevorzugten Heizungsunterstützung abgeändert werden, da sich die vertikale Anordnung der Tauschersegmente damit umkehrt. Auch können einzelne Tauschersegmente innerhalb der Wärmetauschereinheit stillgelegt (blindgeflanscht) oder (re-) aktiviert werden. Dies macht den erfindungsgemäßen Wärmespeicher besonders flexibel für unterschiedlichste Anwendungsfälle.

Der erfindungsgemäße Wärmespeicher gestattet mit der zugehörigen Wärmetauschereinheit unter Verzicht auf die aus dem Stand der Technik bekannte Steigleitung eine effiziente und flexible Nutzung von insbesondere solarthermischer Energie und verhindert zugleich unerwünschte Wärmeverluste aufgrund von Vermischungen, die nach dem Stand der Technik innerhalb der Wärmetauschereinheit vom höchsten bis zum niedrigsten Temperaturniveau des Wärmetauscherbehälters möglich ist.

Nachfolgend soll eine Ausführungsform der Erfindung anhand eines Figurenbeispiels näher beschrieben werden. Dabei zeigt
- Fig. 1: eine schematische Ansicht eines erfindungsgemäßen Wärmespeichers und
- Fig. 2: eine Zirkulationssperre in Detailansicht.

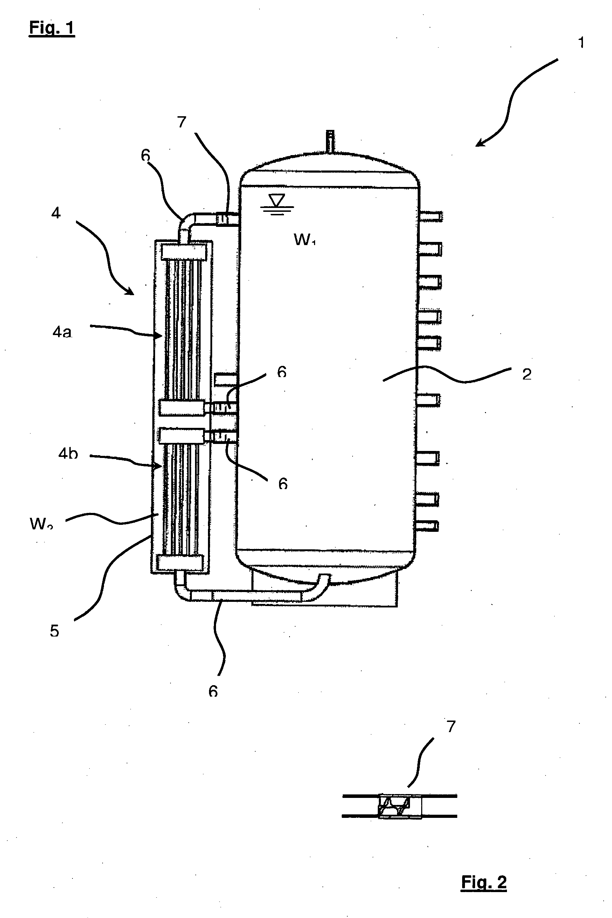

Fig. 1 zeigt einen Wärmespeicher 1. Dieser umfasst einen zylindrischen Behälter 2 und eine daran angrenzende Wärmetauschereinheit 4. Die Wärmetauschereinheit 4 umfasst einen zylinderförmigen Tauscherbehälter 5, der an seinem oberen und unteren Ende verschlossen ist und über nicht dargestellte Anschlüsse mit einem zweiten Wärmeträger W₂ beaufschlagbar ist. Der zweite Wärmeträger kann insbesondere von einer Solaranlage bereitgestellt werden.

Innerhalb des Tauscherbehälters 5 sind zwei in vertikaler Richtung angeordnete Tauschersegmente 4a, 4b vorgesehen, die als Rohrbündelwärmetauscher ausgeführt sind. Jedes Tauschersegment 4a, 4b ist jeweils an seinem oberen bzw. unteren Endabschnitt, in dem die Rohrbündel in einen gemeinsamen Sammler münden, über jeweils eine Verbindungsleitung 6 mit dem angrenzenden Behälter 2 verbunden. Der Behälter 2 ist zur Aufnahme eines ersten Wärmeträgers W₁, insbesondere Wasser, ausgebildet. Der erste Wärmeträger füllt nicht nur den Behälter 2, sondern über die Verbindungsleitungen 6 auch das Innere der Rohrbündel der beiden Tauschersegmente 4a und 4b.

Auf der Außenseite der Rohrbündel (Primärseite) wird erfindungsgemäß der zweite Wärmeträger W₂ vorgehalten, wobei sich dieser zweckmäßigerweise in unterschiedlich temperierten Schichten anordnet. Die Wärmetauschereinheit 4 erstreckt sich im Wesentlichen über die gesamte Höhe des Behälters 2, so dass die im Tauscherbehälter 5 ausgebildete Schichtung des zweiten Wärmeträgers bereits grob angenähert derjenigen des ersten Wärmeträgers im Behälter 2 entspricht. Über den Wärmeaustausch zwischen dem außenseitig der Rohrbündel vorgehaltenen zweiten Wärmeträger W₂ und den innerhalb der Rohrbündel geführten ersten Wärmeträger W₁ entsteht in jedem Tauschersegment 4a, 4b, jeweils abhängig vom Temperaturniveau des ersten Wärmeträgers im Behälter 2 auf Höhe der Verbindungsleitungen 6 eine Strömung nach dem Thermosiphonprinzip, so dass wärmeres Wasser durch die jeweils oberen Verbindungsleitungen jedes Tauschersegments in den Behälter 2 einströmen kann, während die jeweils unteren Verbindungsleitungen die Rückführung des kühleren Wärmeträgers in die Wärmetauschereinheit 4 ermöglichen.

Zur Vermeidung entgegengesetzter Strömungen innerhalb einer Verbindungsleitung 6 sind mit Ausnahme der untersten alle Verbindungsleitungen 6 mit einer Zirkulationssperre 7 ausgestattet. Die in der obersten Verbindungsleitung 6 gemäß Fig. 1 bezeichnete Zirkulationssperre 7 ist in Fig. 2 in leicht vergrößerter schematischer Ansicht zu sehen. Es handelt sich um ein helixförmiges einstückiges Element, welches vor der Montage der Verbindungsleitung in diese eingeschoben wurde und eine Strömung durch diese Leitung so erzwingt, dass diese die Leitung im unteren und im oberen Leitungsquerschnitt durchströmt.

## Patentansprüche

1. Wärmespeicher (1) mit einem Behälter (2) zur temperaturgeschichteten Aufnahme eines ersten Wärmeträgers (W₁) und mit einer außerhalb des Behälters (2) vorgesehenen Wärmetauschereinheit (4) zur Erwärmung des ersten Wärmeträgers (W₁) mittels einem zweiten Wärmeträger (W₂),
**dadurch gekennzeichnet**,
dass die Wärmetauschereinheit (4) wenigstens zwei getrennte Tauschersegmente (4a, 4b...) vorsieht, wobei jedes Tauschersegment (4a, 4b...) über einen eigenen Ladekreis mit dem Behälter (2) verbunden ist,
wobei die einzelnen Tauschersegmente (4a, 4b...) in vertikaler Richtung vollständig übereinander oder einander nur teilweise überlagernd in der Wärmetauschereinheit (4) angeordnet und derart ausgebildet sind, dass die Tauschersegmente den ersten Wärmeträger nur im Bereich desjenigen Temperaturintervalls erwärmen, welches durch die Höhenanordnung des jeweiligen Tauschersegments innerhalb der Wärmetauschereinheit und damit innerhalb des geschichteten zweiten Wärmeträgers bestimmt wird.

2. Wärmespeicher nach Anspruch 1, **dadurch gekennzeichnet, dass** die Wärmetauschereinheit (4) einen alle Tauschersegmente (4a, 4b...) beinhaltenden, mit dem zweiten Wärmeträger (W₂) zu füllenden Tauscherbehälter (5) umfasst.

3. Wärmespeicher nach einem der vorigen Ansprüche, **dadurch gekennzeichnet, dass** die Wärmetauschereinheit (4) die Bereitstellung des zweiten Wärmeträgers (W₂) in übereinanderliegenden, von seiner Temperatur abhängigen einzelnen Schichten erlaubt.

4. Wärmespeicher nach einem der vorigen Ansprüche, **dadurch gekennzeichnet dass** die Wärmetauschereinheit (4) einen mit dem zweiten Wärmeträger (W₂) zu befüllenden, vorzugsweise zylindrischen Mantelraum eines Tauscherbehälters (5) vorsieht, während die einzelnen, innerhalb des Tauscherbehälters (5) angeordneten und vorzugsweise als Rohrbündelwärmetauscher ausgeführten Tauschersegmente (4a, 4b...) vom ersten Wärmeträger (W₁) durchströmbar sind.

5. Wärmespeicher nach einem der vorigen Ansprüche, **dadurch gekennzeichnet dass** jedes Tauschersegment (4a, 4b...) zur Ausbildung eines eigenen Ladekreises und zum Austausch der erstens Wärmeträgers (W₁) über Verbindungsleitungen (6) mit dem Behälter (2) verbunden ist, wobei die Verbindungsleitungen (6) eines Ladekreises auf unterschiedlichen vertikalen Niveaus angeordnet sind.

6. Wärmespeicher nach einem der vorigen Ansprüche, **dadurch gekennzeichnet dass** in wenigstens einer ein Tauschersegment (4a, 4b...) mit dem Behälter (2) verbindenden Leitung eine Zirkulationssperre (7) angeordnet ist, um entgegengesetzt gerichtete Strömungen innerhalb der Leitung zu verhindern.

7. Wärmespeicher nach dem vorigen Anspruch, **dadurch gekennzeichnet, dass** die Zirkulationssperre (7) ausgebildet wird
a) durch zwei innerhalb der Leitung zueinander beabstandete, den Leitungsquerschnitt an jeweils unterschiedlichen Querschnittspositionen verengende Plättchen, oder
b) durch ein helixförmiges Einsatzelement.

8. Wärmespeicher nach einem der vorigen Ansprüche, **dadurch gekennzeichnet dass** sich wenigstens zwei der Tauschersegmente (4a, 4b...) hinsichtlich ihrer vertikalen Ausdehnung unterscheiden.

9. Wärmespeicher nach einem der vorigen Ansprüche, **dadurch gekennzeichnet dass** sich die der Tauscherbehälter (5) der Wärmetauschereinheit (4) im Wesentlichen über die Höhe des Behälters (2) erstreckt.

## Claims

1. A heat accumulator (1) having a container (2) for receiving in a thermally stratified manner a first heat carrier (W₁) and having a heat-exchanger unit (4) provided outside the container (2) for heating the first heat carrier (W₁) by means of a second heat carrier (W₂),
**characterised in that**
the heat-exchanger unit (4) provides at least two separate exchanger segments (4a, 4b...), wherein each exchanger segment (4a, 4b...) is connected to the container (2) by way of its own loading circuit,
wherein the individual exchanger segments (4a, 4b...) are arranged in the heat-exchanger unit (4) in the vertical direction so as to be completely one on top of the other or so as to overlap each other only in part and are configured in such a way that the exchanger segments heat the first heat exchanger only in the range of that temperature interval that is determined by the vertical arrangement of the respective exchanger segment within the heat-exchanger unit and thus within the stratified second heat carrier.

2. A heat accumulator according to claim 1, **characterised in that** the heat-exchanger unit (4) comprises an exchanger container (5) that contains all the exchanger segments (4a, 4b...) and is to be filled with the second heat carrier (W₂).

3. A heat accumulator according to one of the previous claims, **characterised in that** the heat-exchanger unit (4) permits the provision of the second heat carrier (W₂) in superimposed individual layers that are dependent on its temperature.

4. A heat accumulator according to one of the previous claims, **characterised in that** the heat-exchanger unit (4) provides a shell space of an exchanger container (5) that is preferably cylindrical and is to be filled with the second heat carrier (W₂), whilst the first heat carrier (W₁) can flow through the individual exchanger segments (4a, 4b...) which are arranged within the exchanger container (5) and are preferably constructed as tube-bundle heat exchangers.

5. A heat accumulator according to one of the previous claims, **characterised in that** each exchanger segment (4a, 4b...) is connected to the container (2) by way of connecting lines (6) in order to form its own loading circuit and to exchange the first heat carrier (W₁), wherein the connecting lines (6) of a loading circuit are arranged at different vertical levels.

6. A heat accumulator according to one of the previous claims, **characterised in that** arranged in at least one line that connects an exchanger segment (4a, 4b...) to the container (2) there is a circulation-inhibitor (7) in order to prevent oppositely directed flows within the line.

7. A heat accumulator according to the previous claim, **characterised in that** the circulation-inhibitor (7) is formed
a) by two small plates that are spaced apart from each other within the line and narrow the cross-section of the line at respectively different cross-sectional positions, or
b) by a helical insert element.

8. A heat accumulator according to one of the previous claims, **characterised in that** at least two of the exchanger segments (4a, 4b...) differ with regard to their vertical extent.

9. A heat accumulator according to one of the previous claims, **characterised in that** the exchanger container (5) of the heat-exchanger unit (4) extends substantially over the height of the container (2).

## Revendications

1. Accumulateur de chaleur (1) comportant un récipient (2) pour la réception, avec stratification en température, d'un premier caloporteur (W₁), et comportant une unité d'échange de chaleur (4), prévue à l'extérieur du récipient (2), pour chauffer le premier caloporteur (W₁) à l'aide d'un deuxième caloporteur (W₂),
**caractérisé en ce que** l'unité d'échange de chaleur (4) prévoit au moins deux segments d'échange distincts (4a, 4b...), chaque segment d'échange (4a, 4b...) étant par un cycle de charge qui lui est propre relié au récipient (2) ; les segments d'échange individuels (4a, 4b...) étant, dans la direction verticale, disposés complètement les uns au-dessus des autres, ou n'étant que partiellement superposés les uns aux autres dans l'unité d'échange de chaleur (4), et étant configurés de telle sorte que les segments d'échange ne chauffent le premier caloporteur que dans la zone de l'intervalle de températures qui est déterminé par la disposition en hauteur du segment d'échange considéré à l'intérieur de l'unité d'échange de chaleur et donc à l'intérieur du deuxième caloporteur stratifié.

2. Accumulateur de chaleur selon la revendication 1, **caractérisé en ce que** l'unité d'échange de chaleur (4) comprend un récipient d'échange (5), contenant tous les segments d'échange (4a, 4b...), et destiné à être rempli par le deuxième caloporteur (W₂).

3. Accumulateur de chaleur selon l'une des revendications précédentes, **caractérisé en ce que** l'unité d'échange de chaleur (4) permet la mise à disposition du deuxième caloporteur (W₂) en couches individuelles disposées les unes au-dessus des autres, et dépendant de sa température.

4. Accumulateur de chaleur selon l'une des revendications précédentes, **caractérisé en ce que** l'unité d'échange de chaleur (4) prévoit un espace intérieur de calandre d'un récipient d'échange (5), de préférence cylindrique, destiné à être rempli par le deuxième caloporteur (W₂), tandis que le premier caloporteur (W₁) peut s'écouler à travers les segments d'échange (4a, 4b...) individuels, disposés à l'intérieur du récipient d'échange (5) et de préférence configurés comme des échangeurs de chaleur à faisceau tubulaire.

5. Accumulateur de chaleur selon l'une des revendications précédentes, **caractérisé en ce que** chaque segment d'échange (4a, 4b...) est, pour réaliser un circuit de charge qui lui soit propre, et pour permettre l'échange du premier caloporteur (W₁), relié par l'intermédiaire de conduites de liaison (6) au récipient (2), tandis que les conduites de liaison (6) d'un cycle de charge sont disposées à des niveaux verticaux différents.

6. Accumulateur de chaleur selon l'une des revendications précédentes, **caractérisé en ce qu'**un dispositif d'arrêt de circulation (7) est disposé dans au moins une conduite reliant un segment d'échange (4a, 4b...) au récipient (2), pour empêcher à l'intérieur de la conduite des écoulements dirigés en sens contraire.

7. Accumulateur de chaleur selon la revendication précédente, **caractérisé en ce que** le dispositif d'arrêt de circulation (7) est constitué
a) de deux plaquettes, écartées l'une de l'autre à l'intérieur de la conduite, qui rétrécissent la section transversale de la conduite au niveau de chacune des positions différentes de la section transversale, ou
b) d'un insert hélicoïdal.

8. Accumulateur de chaleur selon l'une des revendications précédentes, **caractérisé en ce qu'**au moins deux des segments d'échange (4a, 4b...) se distinguent pour ce qui est de leur extension verticale.

9. Accumulateur de chaleur selon l'une des revendications précédentes, **caractérisé en ce que** le récipient d'échange (5) de l'unité d'échange de chaleur (4) s'étend pour l'essentiel sur la hauteur du récipient (2).
